# EUROPÄISCHE PATENTSCHRIFT

(11) **EP 0 744 025 B1**
(45) Veröffentlichungstag und Bekanntmachung des Hinweises auf die Patenterteilung: **02.06.1999**
(21) Anmeldenummer: 95909679.3
(22) Anmeldetag: 07.02.1995
(51) Int. Cl.: G01N 30/48, B01D 15/08, B01J 20/32

(54) **CHROMATOGRAPHIEMATERIAL**
CHROMATOGRAPHIC MATERIAL
MATERIAU CHROMATOGRAPHIQUE

(30) Priorität: 08.02.1994 DE 4403940
(43) Veröffentlichungstag der Anmeldung: 27.11.1996
(73) Patentinhaber: GENOMED MOLEKULARBIOLOGISCHE UND DIAGNOSTISCHE PRODUKTE GMBH, 32545 Bad Oeynhausen (DE)
(72) Erfinder: MANZ, Thomas, D-32549 Bad Oeynhausen (DE); TITTGEN, Jochen, D-32545 Bad Oeynhausen (DE)
(74) Vertreter: Draudt, Axel Hermann Christian (DE)
(86) Internationale Anmeldenummer: EP9500434
(87) Internationale Veröffentlichungsnummer: WO9522053

(56) Entgegenhaltungen:
- WO-A-90/08584
- WO-A-91/05606
- DE-A- 4 217 101

## Beschreibung

Die Erfindung betrifft ein Chromatographiematerial zur Trennung von Nukleinsäuregemischen sowie ein chromatographisches Verfahren zur Trennung von Nukleinsäuregemischen.

Der Fortschritt in der Biochemie, Molekularbiologie und Humangenetik und deren Anwendungen in der Technik, Medizin, Pharmazie und Gentechnologie erfordern eine rasche und systematische Trennung und Isolierung von Nukleinsäuren. So tritt z.B. in der Molekularbiologie häufig das Problem auf, daß aus einem natürlich vorkommenden Gemisch aus 100 und mehr

Komponenten eine bestimmte Nukleinsäure isoliert werden muß, welche in diesem Gemisch in Konzentrationen von weniger als 0,1% enthalten ist. Die Anforderungen an ein chromatographisches Verfahren umfassen daher zum einen die quantitative Isolierung der Nukleinsäure und zum anderen die quantitative Abtrennung der 99,9% Verunreinigungen, um somit die Nukleinsäure als molekulare Spezies bis zur Homogenität zu reinigen.

Die bekannten Chromatographieverfahren sind jedoch hinsichtlich der erreichbaren Auflösung der Nukleinsäuregemische und der damit verbundenen Reinheit der zu isolierenden Nukleinsäuren nicht befriedigend. Ebenso werden in den bekannten Verfahren häufig aufwendige und kostenintensive Apparaturen, wie Hochdruckflüssigkeitschromatographen (HPLC) und/oder Ultrazentrifugen, toxische Substanzen, wie Phenol, Chloroform oder Ethidiumbromid oder in Folgeexperimenten störende Substanzen, wie RNAse oder Protease eingesetzt.

In der US-A 4029583 wird ein zur Trennung von Proteinen, Peptiden und Nukleinsäuren geeignetes chromatographisches Trägermaterial aus Silicagel beschrieben, an das mittels eines Silanisierungsreagenzes eine stationäre Phase mit Anionen- oder Kationentauscher bildenden Gruppen gebunden ist, die mit den zu trennenden Substanzen in Wechselwirkung treten. Das silanisierte Silicagel wird mit Wasser in Berührung gebracht, wobei die Gefahr besteht, daß die stationäre Phase polymerisiert und das Chromatographiematerial unbrauchbar wird.

Gemäß der EP-B 0 104 210 können Nukleinsäuregemische in ihre Bestandteile getrennt werden, wenn ein Chromatographiematerial verwendet wird, dessen Trägermaterial zuerst mit einem Silanisierungsreagenz umgesetzt wird, welches eine flexible Kettengruppe aufweist, die ihrerseits wiederum durch Reaktion mit einem Anionen- oder Kationentauscher bildenden Reagenz zum fertigen Chromatographiematerial umgesetzt wird. Dieses bekannte Chromatographiematerial trennt Nukleinsäuregemische unter Verwendung von HPLC-Apparaturen auf. Jedoch bei langkettigen Nukleinsäuren kann die Verwendung der HPLC zu Beschädigungen (z.B. Degradation) der langkettigen Nukleinsäuren aufgrund hoher Scherkräfte führen.

In der EP-B 0 268 946 wird ein Verfahren zur Trennung von langkettigen Nukleinsäuren beschrieben, wobei langkettige Nukleinsäuren an einen porösen Anionentauscher fixiert werden. Als Anionenaustauscher wird der in der EP-B 0 104 210 beschriebene Anionenaustauscher verwendet. Eine zufriedenstellende Reinheit der isolierten Nukleinsäuren kann jedoch nicht erreicht werden.

In der DE-A 39 35 098 wird ein silanisiertes chromatographisches Trägermaterial beschrieben, wobei das Silanisierungsreagenz mindestens eine bereits mit einem primären oder sekundären Hydroxyalkylamin umgesetzte reaktive Gruppe aufweist oder eine mit einem Hydroxyalkylamin umsetzbare reaktionsfähige Gruppe enthält. Mit diesem Material ist eine Trennung von Nukleinsäuren in der HPLC unter Verwendung eines kontinuierlichen Salzgradienten gezeigt (Beispiel 5).

Mit einfachen chromatographischen Verfahren, welche mit einer gewissen Anzahl theoretischer Trennböden arbeiten, wie eine einfache Säulenchromatographie, bei der der Fluß der mobilen Phase aufgrund der Schwerkraft hervorgerufen wird, Trennungen in Spincolumns (einzusetzen in eine Zentrifuge), bei der der Fluß der mobilen Phase durch die Zentrifugalkraft erzeugt wird, oder Batchverfahren, bei denen das Chromatographiematerial in Suspension vorliegt, und unter Vermeidung eines kontinuierlichen Salzgradienten, d.h. unter Verwendung eines Stufengradienten, reicht jedoch die Trennleistung bekannter Materialien zur Lösung schwieriger Trennprobleme nicht aus. Insbesondere bei der Isolierung von DNA aus Kulturen transformierter Bakterien, bei der sehr geringe Mengen an DNA von einer RNA-Menge in mehr als tausendfachem Überschuß abgetrennt werden muß, liefern einfache säulenchromatographische Verfahren nach dem Stand der Technik häufig unvollständige Trennungen. Es wird in solchen Fällen üblicherweise empfohlen, vor der chromatographischen Trennung die in großem Überschuß enthaltene RNA durch eine RNAse-Verdauung zu Ribonukleotiden und kürzeren RNA-Fragmenten zu zerstören.

Eine solche Vorgehensweise hat jedoch zwei entscheidende Nachteile. Zum einen ist es unmöglich, die RNA wegen ihrer Zerstörung in Folgeexperimenten zu verwenden. Zum anderen besteht bei der Verwendung von RNAse in den empfohlenen Konzentrationen von 100-400 µg/ml die Gefahr einer Kontamination von Labor, Geräten und der isolierten DNA selbst. Eine Kontamination mit geringsten Mengen RNAse führt zur Gefährdung von RNA-bildenden Folgeexperimenten, wie der in-vitro Transkription oder von Folgeexperimenten, in denen RNA beteiligt ist, wie die Northern-Hybridisierung und andere Festphasenhybridisierungen, wie z.B. die Hybridselektion.

Bei einer Trennung ohne RNAse-Verdauung führen dagegen Kontaminationen von RNA in der isolierten DNA zu einer Erschwerung oder Verhinderung von Folgeexperimenten, wie die Sequenzierung mit Fluoreszenzmarkern oder mit radioaktiver Markierung, sowie alle durch "priming" initialisierten Reaktionen, z.B. alle Typen der PCR.

Der vorliegenden Erfindung liegt daher die Aufgabe zugrunde, ein Chromatographiematerial zur Trennung von Nukleinsäuregemischen zur Verfügung zu stellen, mit dem die zu isolierenden Nukleinsäuren in höchster Reinheit isoliert werden können, wobei völlig auf die Verwendung toxischer Substanzen und RNAse sowie auf die Durchführung der Trennung mit aufwendigen und kostenintensiven Apparaturen verzichtet werden kann.

Diese Aufgabe wird mit den Merkmalen des Patentanspruchs 1 gelöst.

Die vorliegende Erfindung betrifft ein Chromatographiematerial zur Trennung von Nukleinsäuregemischen, bei dem ein Träger mit einem Silanisierungsreagenz umgesetzt ist, welches dadurch gekennzeichnet ist, daß das Silanisierungsreagenz eine mit einem Alkyl- oder Dialkylamin umgesetzte reaktive Gruppe aufweist, oder eine mit einem Alkyl- oder Dialkylamin umsetzbare reaktionsfähige Gruppe enthält, die anschließend mit dem Alkyl- oder Dialkylamin zur Reaktion gebracht wird, wobei der Träger eine Partikelgröße von 1 bis 500 µm und einen Porendurchmesser von 4 bis 6 nm aufweist.

Die Unteransprüche betreffen bevorzugte Ausführungsformen des erfindungsgemäßen Chromatographiematerials.

Die Erfindung betrifft weiterhin ein Verfahren zur Trennung von Nukleinsäuregemischen mit dem erfindungsgemäßen Chromatographiematerial.

Die Erfindung wird durch die Figuren erläutert. Es zeigen
- Fig. 1: die Auftrennung von Gemischkomponenten auf einen Agarosegel unter Verwendung des erfindungsgemäßen Chromatographiematerials;
- Fig. 2: die Auftrennung von Gemischkomponenten auf einem Agarosegel unter Verwendung eines Chromatographiematerials gemäß dem Stand der Technik;
- Fig. 3: die Auftrennung von Gemischkomponenten auf einem Agarosegel unter Verwendung des Chromatographie- materials von Fig. 2 und des erfindungsgemäßen Chromatographiematerials;
- Fig. 4: die Auftrennung von Gemischkomponenten auf einem Agarosegel unter Verwendung eines Chromatographiematerials gemäß einem weiteren Stand der Technik; und
- Fig. 5: die Auftrennung von Gemischkomponenten auf einem 'Agarosegel unter Verwendung des Chromatographiematerials von Fig. 4 und des erfindungsgemäßen Chromatographiematerials.

Es hat sich überraschenderweise herausgestellt, daß mit dem erfindungsgemäßen Chromatographiematerial Nukleinsäuregemische mit hoher Effizienz aufgetrennt werden können. So ist es beispielsweise möglich, aus Gemischen, die neben großen Mengen an RNA nur sehr geringe Mengen an DNA enthalten, die DNA mit höchster Reinheit, also ohne Anteil an RNA, zu isolieren. Es kann dabei völlig auf die Verwendung toxischer Substanzen, wie Phenol, Chloroform oder Ethidiumbromid verzichtet werden. Des weiteren ist das erfindungsgemäße Chromatographiematerial bei technisch einfachen chromatographischen Verfahren, wie die einfache Säulenchromatographie, Trennungen in Spincolumns oder Trennungen in Batchverfahren, bei denen das Chromatographiematerial in Suspension vorliegt oder an Reaktionsgefäße, Mikrotiterplatten, Pipettenspitzen, Rührstäbchen oder Teststreifen fixiert ist, einsetzbar, so daß eine Auftrennung von Nukleinsäuren ohne Einsatz aufwendiger und kostenintensiver Apparaturen, wie beispielsweise HPLC oder Ultrazentrifugen, durchgeführt werden kann. Es wird insbesondere eine rasche Gruppentrennung von RNA und DNA in einer einfachen Säulenchromatographie oder einem Batchverfahren unter Vermeidung von RNAse ermöglicht.

Als Träger kann jedes geeignete Trägermaterial verwendet werden. Als besonders geeignet hat sich Silicagel, Alumiumoxid, Titandioxid, poröses Glas oder ein Polymerträger erwiesen.

Der Träger hat eine Partikelgröße von 1 bis 500µm und einen Porendurchmesser von 4 bis 6 nm und kann aus einem porösen oder nicht porösen Material bestehen. Besonders geeignet sind Träger mit einer Partikelgröße von 63 bis 200 µm.

Die Modifizierung des Trägers zum erfindungsgemäßen Chromatographiematerial kann in einer ein- oder zweistufigen Reaktion erfolgen. Bei der einstufigen Reaktion wird das Trägermaterial mit einem Silanisierungsreagenz, das eine Alkyl- oder Dialkylaminogruppe bereits enthält, umgesetzt. Bei der zweistufigen Reaktion wird das Trägermaterial zunächst mit einem Silanisierungsreagenz umgesetzt, welches nach der Kopplung an den Träger eine reaktionsfähige Gruppe enthält, welche in einem zweiten Syntheseschritt mit einem Alkyl- oder Dialkylamin zur Reaktion gebracht wird.

Das Silanisierungsreagenz, mit dem der Träger umgesetzt wird, weist die allgemeine Formel

R₁R₂R₃SiR₄

auf, worin
R₁ ein Alkoxyrest mit 1-10 Kohlenstoffatomen, ein Halogenatom oder eine Dialkylaminogruppe mit Alkylresten mit 1-6 Kohlenstoffatomen bedeuten,
R₂ und R₃ ein Kohlenwasserstoffrest mit 1-10 Kohlenstoffatomen, ein Alkoxyrest mit 1-10 Kohlenstoffatomen, ein Halogenatom, eine Dialkylaminogruppe mit Alkylresten mit 1-6 Kohlenstoffatomen oder ein durch mindestens eine Oxaoder Aminogruppe unterbrochener Alkylrest mit 4-20 Kohlenstoffatomen ist, wobei dieser Rest auch ein- oder mehrfach durch Halogenatome, Cyan-, Nitro-, Amino-, Monoalkylamino-, Hydroxy- oder Arylgruppen substituiert sein kann, und
R₄ bei einstufiger Synthese ein Kohlenwasserstoffrest mit 1-20 Kohlenstoffatomen oder ein durch mindestens eine Oxa- oder Aminogruppe unterbrochener Alkylrest ist, wobei dieser Rest ein- oder mehrfach mit Halogenatomen, Cyan-, Amino-, Alkoxy-, Hydroxy-, Aryl-, oder Epoxygruppen substituiert sein kann und eine Alkyl- oder Dialkylaminogruppe enthält, wobei insbesondere eine Gruppe mit der Formel 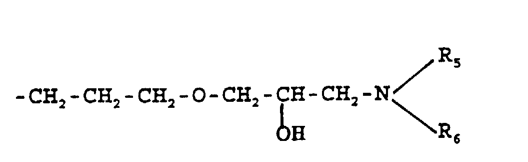
bevorzugt ist, worin
R₅ und R₆ Alkylgruppen mit 1-10 Kohlenstoffatomen, wobei
R₅ oder R₆ auch ein Wasserstoffatom sein kann, bedeuten, oder
R₄ bei zweistufiger Synthese ein Kohlenwasserstoffrest mit 1-20 Kohlenstoffatomen oder ein durch mindestens eine Oxa- oder Aminogruppe unterbrochener Alkylrest ist, wobei dieser Rest ein- oder mehrfach mit Halogenatomen, Cyan-, Amino-, Alkylamino-, Dialkylamino-, Alkoxy-, Hydroxy-, Aryl- oder Epoxygruppen substituiert sein kann.

Bei der zweistufigen Synthese wird die die Wechselwirkung mit der zu trennenden Substanz bewirkende flexible Kettengruppierung R₄ anschließend durch Reaktion mit einem Alkyl- oder Dialkylamin unter Bildung eines Anionenaustauschers modifiziert.

In einer bevorzugten Ausführungsform der Erfindung werden als Dialkylamin Diethylamin oder Dimethylamin verwendet.

Bei der einstufigen Synthese wird in einer bevorzugten Ausführungsform ein Silanisierungsreagenz verwendet, bei dem R₅ und R₆ eine Ethylgruppe bedeutet.

In einer bevorzugten Ausführungsform ist die mit dem Alkyl- oder Dialkylamin umgesetzte oder umzusetzende reaktive Gruppe, die 3-Glycidoxypropylgruppe.

Die Silanisierung des Trägers erfolgt bevorzugt unter wasserfreien Bedingungen, um somit die Polymerisation des Silanisierungsreagenz zu verhindern.

Mit dem erfindungsgemäßen Chromatographiematerial ist es möglich, ohne aufwendige technische Einrichtungen, wie beispielsweise HPLC, und unter Vermeidung des Zusatzes von RNAse Nukleinsäuregemische mit hoher Effizienz aufzutrennen. Als Beispiel für ein aufzutrennendes Nukleinsäuregemisch seien Lysate transformierter Bakterien genannt, wobei eine vollständige Gruppentrennung in RNA und DNA erfolgt. Des weiteren ist es möglich, mit dem erfindungsgemäßen Chromatographiematerial beispielsweise Phagemid-DNA, Phagen-DNA, Cosmid-DNA, genomische DNA, YAC-DNA, fragmentierte DNA, tRNA, mRNA, hnRNA, snRNA, Virus-DNA oder Viroid-DNA aufzutrennen.

Die Auftrennung von Nukleinsäuregemischen mit dem erfindungsgemäßen Chromatographiematerial erfolgt mit einem einfachen Stufengradienten, durch Waschen der mit dem Nukleinsäuregemisch beladenen Säule und anschießendes Eluieren der gewünschten Nukleinsäure mit einer geeigneten gepufferten Salzlösung. Der überwiegende Teil der RNA wird während der Bindung der DNA an das erfindungsgemäße Chromatographiematerial abgetrennt, wonach noch verbleibende RNA während des Waschvorgangs herausgespült wird. Somit ist eine Behandlung mit RNAse nicht notwendig.

Das erfindungsgemäße Chromatographiematerial kann auf verschiedene Weise in den Handel gebracht werden. Beispielsweise ist es möglich, das erfindungsgemäße Chromatographiematerial als Kit zusammen mit dem für die Chromatographie benötigten Equipment anzubieten. Andere Handelsformen sind selbstverständlich miteingeschlossen.

Die Erfindung wird durch die nachfolgenden Beispiele, ohne sie auf diese einzuschränken, veranschaulicht.

### Beispiele

### Beispiel 1:

100g Silicagel mit einem Porendurchmesser von 6nm und einer spezifischen Oberfläche von 500m²/g werden in 600ml trockenem Xylol mit 62g eines Silans der Formel 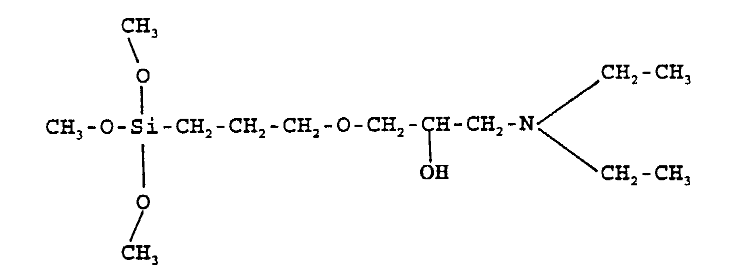 versetzt, durch dreimaliges Anlegen eines Vakuums und anschließendem Belüften mit Stickstoff entgast und bei 120°C unter Ausschluß von Luft und Feuchtigkeit für 2 Stunden erhitzt. Das modifizierte Silicagel wird abfiltriert, mit Xylol und Tetrahydrofuran mehrfach gewaschen und anschließend bei 70°C im Vakuum getrocknet.

### Beispiel 2:

100g Silicagel mit einem Porendurchmesser von 4nm und einer spezifischen Oberfläche von 750m²/g werden in 600 ml trockenem Xylol mit 46g 3-Glycidoxypropyltrimethoxysilan und 0,lml Triethylamin versetzt. Die Reaktionsmischung wird durch dreimaliges Anlegen eines Vakuums und anschließendem Belüften mit Stickstoff entgast und bei 130°C unter Ausschluß von Luft und Feuchtigkeit für 4 Stunden erhitzt. Es wird abfiltriert und mit Xylol und Tetrahydrofuran gewaschen. Das modifizierte Silicagel wird bei 50°C im Vakuum getrocknet.

Das Produkt wird anschließend mit 600 ml Dioxan und 32 g Diethylamin versetzt und 18 Stunden unter Rückfluß erhitzt. Das Produkt wird mit Dioxan und Methanol gewaschen und bei 70°C im Vakuum getrocknet.

### Beispiel 3 (nicht entsprechend der Erfindung):

100g Silicagel mit einem Porendurchmesser von 30nm und einer spezifischen Oberfläche von 60m²/g werden in 600 ml trockenem Xylol mit 7,36g 3-Glycidoxypropyltrimethoxysilan wie unter Beispiel 2 beschreiben umgesetzt. Das getrocknete Zwischenprodukt wird in 200 ml einer 5,6M Lösung von Dimethylamin in absolutem Ethanol für 15 Stunden unter Rückfluß erhitzt. Das Produkt wird mit Methanol gewaschen und bei 70°C im Vakuum getrocknet.

### Beispiel 4:

200mg des modifizierten Endprodukts aus Beispiel 1 wird in eine handelsübliche Festphasenextraktionssäule (PolypropylenSäure mit HDPE-Fritten) mit einem Volumen von 4 ml gefüllt.

Die Trennleistung des Materials wird anhand der Isolierung von Plasmid-DNA aus dem Zellysat von pBR322 transformierten RR-I E.coli Zellen demonstriert.

Hinsichtlich der hier beschriebenen Methoden wird auf T. Maniatis, E.F. Fritsch, J. Sambrook, "Molecular cloning", Cold Spring Harbour Laboratory Press, 1989, Bezug genommen.

10 ml einer mit pBR322 transformierten RR-I E.coli Kultur, welche in LB-Ampicilin-Medium bis zu einer Zelldichte von 9,84 x 10⁸ Zellen/ml angezogen wurde, wird bei 4000g für 10 Minuten zentrifugiert. Der Überstand wird vorsichtig abgenommen und das Bakterienpellet in 300µl einer Lösung aus 50mM Tris-HCl pH 8.0, und 10mM EDTA resuspendiert. Die Bakteriensuspension wird mit 300 µl einer Lösung aus 0,2M NaOH, 1% Natriumdodecylsufat versetzt und 5 Munuten bei Raumtemperatur inkubiert. Danach werden 300 µl einer Lösung aus 3,3M Kaliumacetat, pH 5,5, hinzugefügt. Das ausgefallene Kaliumdodecylsulfat wird durch Zentrifugation bei 4°C und 10000g abgetrennt. Die den Anionenaustauscher enthaltende Festphasenextraktionssäule wird durch Aufgabe von lml einer Lösung aus 600mM NaCl, 100mM NaAc, pH 5,0, und 0,15% Triton X-100 konditioniert. Der klare Überstand der Kaliumdodecylsulfat-Zentrifugation (cleared lysate) wird auf die Säule aufgetragen. Anschließend wird die Säule 2 Mal mit 2ml einer Lösung aus 800mM NaCl, 100mM NaAc, pH 5,0, gewaschen. Die an den Anionenaustauscher gebundene Plasmid-DNA wird dann mit einer Lösung aus 1250mM NaCl, Tris-HCl, pH 8,5, eluiert.

Sowohl der Durchlauf des Zellysats als auch die beiden Waschlösungen und das Eluat werden jeweils durch Zugabe von 0,7 Volumen Isopropanol gefällt und durch Zentrifugation für 30 Minuten bei 4°C und 10000g pelletiert. Der Überstand wird dann verworfen, wonach die Nukleinsäurepellets mit 70% Ethanol gewaschen und anschließend in TE, pH 8,0, gelöst werden.

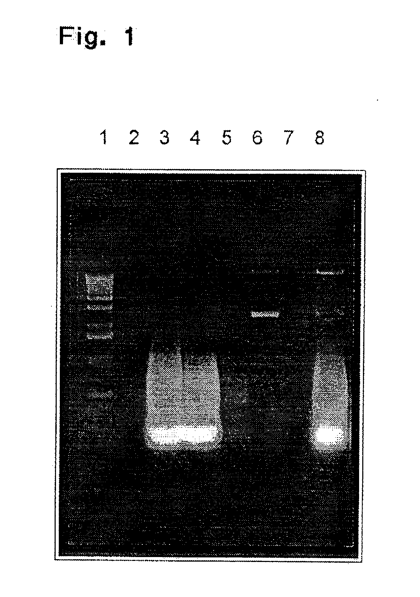

Fig. 1 zeigt die Auftrennung der Gemischkomponenten auf einem 1% TAE-Agarosegel. In die einzelnen Spuren wurden folgende Komponenten aufgetragen:
- Spur 1:: 1kb ladder (Gibco BRL), als Längenstandard;
- Spur 8:: 20% des auf die Säule aufgetragenen "cleared lysate". Es entspricht dem zu trennenden DNA/RNA-Gemisch vor der Trennung als Referenz. Die Bande für die Plasmid-DNA ist nur schwach gefärbt und zeigt ein starkes "smiling" wegen der enormen RNA-Mengen;
- Spur 3:: 20% des Durchlaufs. Er entspricht dem "cleared lysate" nach Bindung an die Anionenaustauschersäule;
- Spur 4:: 20% der ersten Waschlösung;
- Spur 5:: 20% der zweiten Waschlösung;
- Spur 6:: 20% der Elutionslösung.

Eine vollständige Auftrennung der Nukleinsäure-Gemischkomponenten ist deutlich am Eluat in Spur 6 zu erkennen, die lediglich die Plasmid-DNA ohne Verunreinigung mit RNA zeigt.

Spektralphotometrische Konzentrationsbestimmungen der RNA und Plasmid-DNA in Durchlauf, Waschlösungen und Eluat ergeben, daß das zu trennende Testgemisch aus 1795,6µg RNA und 2,795µg Plasmid-DNA besteht. Somit kann DNA, welche nur zu 0,16% in einem Nukleinsäuregemisch enthalten ist, quantitativ und in hoher Reinheit isoliert werden.

### Vergleichsbeispiel 1:

Es wird mit dem im Handel erhältlichen Plasmid-Isolierungs-Kit "Qiagen Plasmid Mini Kit" der Firma Diagen GmbH (Hilden), Prod. No. 12123, ein analog Beispiel 4 beschriebenes Nukleinsäuregemisch aufgetrennt, wobei die Aufarbeitung zum "cleared lysate" gemäß der Produktbeschreibung erfolgte, allerdings mit der Ausnahme, daß keine RNAse-Behandlung erfolgte.

Eine den bekannten Ionenaustauscher enthaltende Säule wird durch Aufgabe von lml einer Lösung von 750mM NaCl, 50mM MOPS, pH 7,0, 15% Ethanol, 0,15% Triton X-100 konditioniert.

Der klare Überstand der Kaliumdodecylsulfat-Zentrifugation (cleared lysate) wird auf die Säule aufgetragen. Anschließend wird die Säule 2 Mal mit 2ml einer Lösung aus 1M NaCl, 50mM MOPS, 15% Ethanol, pH 7,0 gewaschen. Die an den Ionenaustauscher gebundene Plasmid-DNA wird mit einer Lösung aus 1250 mM NaCl, Tris-HCl, 15% Ethanol, pH 8,5, eluiert.

Sowohl der Durchlauf des Zellysats als auch die beiden Waschlösungen und das Eluat werden jeweils durch Zugabe von 0,7 Volumen Isopropanol gefällt und durch Zentrifugation bei 4°C und 15000g für 30 Minuten pelletiert. Der Überstand wird dann verworfen, wonach die Nukleinsäurepellets mit 70% Ethanol gewaschen und anschließend in TE, pH 8,0, gelöst werden.

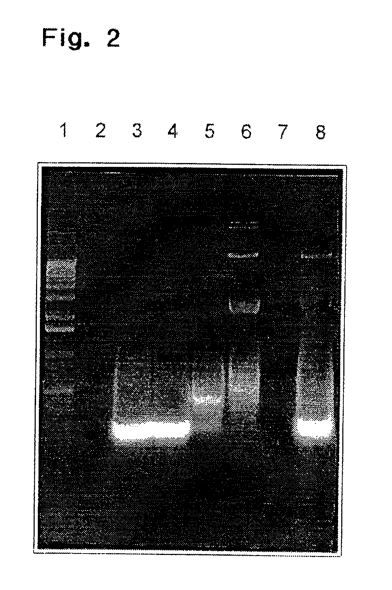

Fig. 2 zeigt die Auftrennung der Gemischkomponenten auf einem 1% TAE-Agarosegel. In den einzelnen Spuren wurden folgende Komponenten aufgetragen:
- Spur 1:: 1kb ladder (Gibco BRL), als Längenstandard;
- Spur 8:: 20% des auf die Säule aufgetragenen "cleared lysate". Es entspricht dem zu trennenden DNA/RNA-Gemisch vor der Trennung als Referenz. Die Bande für die Plasmid DNA ist nur schwach gefärbt und zeigt ein starkes "smiling" wegen der enormen RNA-Mengen.
- Spur 3:: 20% des Durchlaufs;
- Spur 4:: 20% der ersten Waschlösung;
- Spur 5:: 20% der zweiten Waschlösung;
- Spur 6:: 20% der Elutionslösung

Wie aus Fig. 2 zu erkennen ist, findet eine saubere Auftrennung der Gemischkomponenten nicht statt. Das Eluat (Spur 6) enthält neben der Plasmid-DNA noch einen erheblichen Anteil an RNA.

Spektralphotometrische Untersuchungen des Eluats zeigen, daß neben den erwarteten 3µg Plasmid-DNA noch 65µg RNA enthalten sind.

### Vergleichsbeispiel 2:

Mit dem isolierten Eluat aus Vergleichsbeispiel 1 wird eine zweite Trennung mit dem erfindungsgemäß modifizierten Chromatographiematerial aus Beispiel 1 durchgeführt.

Das in Vergleichsbeispiel 1 erhaltene gefällte Eluat wird in 450µl TE, pH 8,0, gelöst und mit 450µl einer Lösung aus 800mM NaCl, 100mM NaAc, pH 5,0, versetzt. Diese DNA/RNA-Mischung wird analog zu Beispiel 4 auf eine konditionierte Säule aufgetragen, 2 Mal mit 2 ml einer Lösung aus 800mM NaCl, 100mM NaAC, pH 5,0, gewaschen und anschließend eluiert.

Sowohl das Eluat gemäß Vergleichsbeispiel 1 als auch die beiden Waschlösungen und das Eluat werden jeweils durch Zugabe von 0,7 Volumen Isopropanol gefällt und durch Zentrifugation bei 4°C und 15000g für 30 Minuten pelletiert. Der Überstand wird dann verworfen, wonach die Nukleinsäurepellets mit 70% Ethanol gewaschen und anschließend in TE, pH 8,0, gelöst werden.

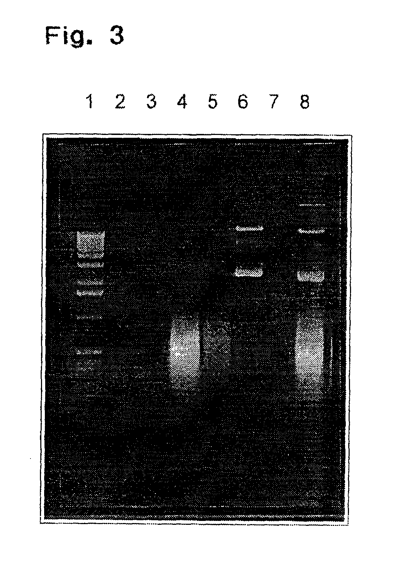

Fig. 3 zeigt die Auftrennung der Gemischkomponenten auf einem 1% TAE-Agarosegel. In den einzelnen Spuren wurden folgende Komponenten aufgetragen:
- Spur 1:: 1kb ladder (Gibco BRL), als Lägenstandard;
- Spur 8:: 20% des Eluates gemäß Vergleichsbeispiel 1 als Referenz;
- Spur 3:: 20% des Durchlaufs;
- Spur 4:: 20% der ersten Waschlösung;
- Spur 5:: 20% der zweiten Waschlösung;
- Spur 6:: 20% der Elutionslösung.

Wie in Fig. 3 zu sehen ist, wird das Eluat der Trennung gemäß Vergleichsbeispiel 1, welches nochmals einer Trennung mit dem erfindungsgemäßen Chromatographiematerial unterworfen wurde, vollständig in seine Komponenten RNA (Spur 4) und DNA (Spur 6) aufgetrennt.

### Vergleichsbeispiel 3:

Es wird mit einem weiteren im Handel erhältlichen Plasmid-Isolierungs-Kit "Nukleobond AX Kit PC 20-1" der Firma Macherey-Nagel GmbH & Co. KG (Düren), Prod. No. 730 571, ein analog Beispiel 4 beschriebenes Nukleinsäuregemisch aufgetrennt, wobei die Aufarbeitung zum "cleared lysate" gemäß der Produktbeschreibung erfolgte, allerdings mit der Ausnahme, daß keine RNAse-Behandlung erfolgte.

Eine den Ionenaustauscher enthaltende Säule wird durch Aufgabe von 1ml einer Lösung aus 900mM KCl, 100mM Tris/H₃PO₄, pH 6,3, 15% Ethanol konditioniert.

Der klare Überstand der Kaliumdodecylsulfat-Zentrifugation (cleared lysate) wird auf die Säule aufgetragen. Anschließend wird die Säule 2 Mal mit 2ml einer Lösung aus 1,3M KCl, 100mM Tris/H₃PO₄, 15% Ethanol, pH 6,3, gewaschen. Die an den Ionenaustauscher gebundene Plasmid-DNA wird mit einer Lösung aus 1000mM KCl, Tris-H₃PO₄, 15% Ethanol, pH 8,5, eluiert.

Sowohl der Durchlauf des Zellysats als auch die beiden Waschlösungen und das Eluat werden jeweils durch Zugabe von 0,7 Volumen Isopropanol gefällt und durch Zentrifugation bei 4°C und 15OOOg für 30 Minuten pelletiert. Der Überstand wird verworfen, wonach die Nukleinsäurepellets mit 70% Ethanol gewaschen und anschließend in TE pH 8,0 gelöst werden.

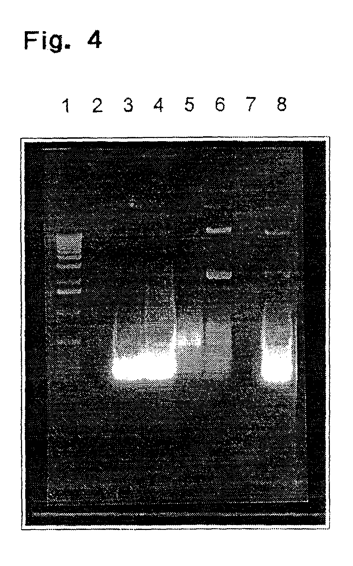

Fig. 4 zeigt die Auftrennung der Gemischkomponenten auf einem 1% TAE-Agarosegel. In den einzelnen Spuren wurden folgende Komponenten aufgetragen:
- Spur 1:: 1kb ladder (Gibco BRL), als Längenstandard;
- Spur 8:: 20% des auf die Säule aufgetragenen "cleared lysate". Es entspricht dem zu trennenden DNA/RNA-Gemisch vor der Trennung als Referenz. Die Bande für die Plasmid-DNA is nur schwach gefärbt und zeigt ein starkes "smiling" wegen der enormen RNA-Mengen;
- Spur 3:: 20% des Durchlaufs;
- Spur 4:: 20% der ersten Waschlösung;
- Spur 5:: 20% der zweiten Waschlösung;
- Spur 6:: 20% der Elutionslösung.

Es ist aus Fig. 4 zu erkennen, daß eine saubere Auftrennung der Gemischkomponenten nicht stattfindet. Das Eluat (Spur 6) enthält neben der Plasmid-DNA noch erhebliche Mengen an RNA.

Spektralphotometrische Untersuchungen des Eluats ergeben, daß neben den erwarteten 3µg Plasmid-DNA noch 15,94µg RNA enthalten sind.

### Vergleichsbeispiel 4:

Es wird wird mit dem isolierten Eluat aus Vergleichsbeispiel 3 eine zweite Trennung mit dem erfindungsgemäß modifizierten Chromatographiematerial aus Beispiel 1 durchgeführt.

Das in Vergleichsbeispiel 3 erhaltene gefällte Eluat wird in 450µl TE, pH 8,0, gelöst und mit 450µl einer Lösung aus 800mM NaCl, 100mM NaAc, pH 5,0, versetzt. Diese DNA/RNA-Mischung wird analog zu Beispiel 4 auf eine konditionierte Säule aufgetragen, 2 Mal mit 2 ml einer Lösung aus 800mM NaCl, 100mM NaAc, pH 5,0, gewaschen und anschließend eluiert.

Sowohl das Eluat gemäß Vergleichsbeispiel 3 als auch die beiden Waschlösungen und das Eluat werden jeweils durch Zugabe von 0,7 Volumen Isopropanol gefällt und durch Zentrifugation bei 4°C und 15000g für 30 Minuten pelletiert. Der Überstand wird dann verworfen, wonach die Nukleinsäurepellets mit 70% Ethanol gewaschen und anschließend in TE, pH 8,0, gelöst werden.

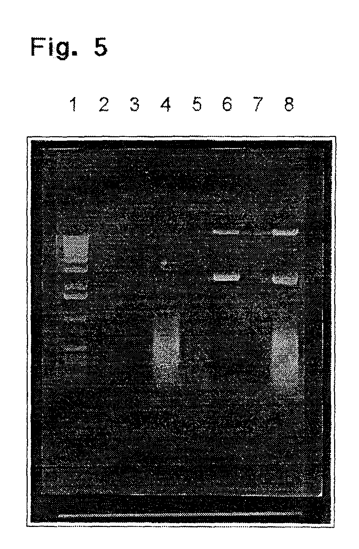

Fig. 5 zeigt die Auftrennung der Gemischkomponenten auf einem 1% TAE-Agarosegel. In den einzelnen Spuren werden folgende Komponenten aufgetragen:
- Spur 1:: 1kb ladder (Gibco BRL), als Längenstandard;
- Spur 8:: 20% des Eluates einer Trennung nach dem Stand der Technik analog zu Vergleichsbeispiel 3 als Referenz;
- Spur 3:: 20% des Durchlaufs;
- Spur 4:: 20% der ersten Waschlösung
- Spur 5:: 20% der zweiten Waschlösung;
- Spur 6:: 20% der Elutionslösung.

Wie in Fig. 5 zu sehen ist, wird das Eluat der Trennung nach dem Stand der Technik (Spur 8) durch eine weitere Trennung mit dem erfindungsgemäßen Chromatographiematerial vollständig in seine Komponenten RNA (Spur 4) und DNA (Spur 6) aufgetrennt.

## Patentansprüche

1. Chromatographiematerial zur Trennung von Nukleinsäuregemischen, bei dem ein Träger mit einem Silanisierungsreagenz umgesetzt ist, das eine mit einem Alkyl- oder Dialkylamin umgesetzte reaktive Gruppe aufweist oder eine mit einem Alkyl- oder Dialkylamin umsetzbare reaktionsfähige Gruppe enthält, die anschließend mit dem Alkyl- oder Dialkylamin zur Reaktion gebracht wird,
dadurch gekennzeichnet,
daß der Träger eine Partikelgröße von 1 bis 500 um und einen Porendurchmesser von 4 bis 6 nm aufweist.

2. Chromatographiematerial nach Anspruch 1,
dadurch gekennzeichnet,
daß der Träger Silicagel, Aluminiumoxid, Titandioxid, poröses Glas oder ein Polymerträger ist.

3. Chromatographiematerial nach einem der Ansprüche 1 oder 2,
dadurch gekennzeichnet,
daß die mit dem Alkyl- oder Dialkylamin umgesetzte oder umzusetzende reaktive Gruppe die 3-Glycidoxypropylgruppe ist.

4. Chromatographiematerial nach einem der Ansprüche 1 bis 3,
dadurch gekennzeichnet,
daß das Dialkylamin Diethylamin oder Dimethylamin ist.

5. Chromatographiematerial nach einem der Ansprüche 1 bis 4,
dadurch gekennzeichnet,
daß die Umsetzung des Trägers mit dem Silanisierungsreagenz unter wasserfreien Bedingungen erfolgt ist.

6. Verfahren zur Trennung von Nukleinsäuregemisch mit einem Chromatographiematerial nach einem der Ansprüche 1 bis 5, wobei
die chromatographische Trennung in einer einfachen Säulenchromatographie, Spincolumns, Batchverfahren, bei denen das Chromatographiematerial in Suspension vorliegt oder an Reaktionsgefäßen, Mikrotiterplatten, Pipettenspitzen, Rührstäbchen oder Teststreifen fixiert ist, durchgeführt wird.

7. Verfahren nach Anspruch 6,
dadurch gekennzeichnet,
daß die chromatographische Trennung in einem Stufengradienten durchgeführt wird.

8. Verfahren nach einem der Ansprüche 6 oder 7,
dadurch gekennzeichnet,
daß keine RNAse verwendet wird.

9. Kit zur Trennung von Nukleinsäuregemischen, welches ein Chromatographiematerial nach einem der Ansprüche 1 bis 5 enthält.

## Claims

1. A chromatography material for separation of nucleic acid mixtures in which a support is converted with a silanization reagent which has a reactive group converted with an alkyl- or dialkylamine, or contains a reactive group that can be converted with an alkyl- or dialkylamine which is then reacted with the alkyl- or dialkylamine, characterized in that the support has a particle size from 1 to 500 µm and a pore diameter from 4 to 6 nm.

2. The chromatography material according to claim 1 characterized in that the support is silica gel, aluminium oxide, titanium dioxide, porous glass or a polymer for support.

3. The chromatography material according to any of claim 1 or 2, characterized in that the reactive group converted or to be converted with the alkyl- or dialkylamine is the 3-glycidoxypropyl group.

4. The chromatography material according to any of claims 1 to 3, characterized in that the dialkylamine is diethylamine or dimethylamine.

5. The chromatography material according to any of claims 1 to 4, characterized in that the conversion of the support with the silanization reagent occurs under anhydrous conditions.

6. A process for separation of nucleic acid mixtures with a chromatography material according to any of claims 1 to 5 wherein the chromatographic separation is carried out in a simple column chromatography, spin columns, batch processes, in which the chromatography material is in suspension or is fixed on reaction vessels, microtiter plates, pipette tips, agitator rods or test strips.

7. The process according to claim 6, characterized in that, the chromatographic separation is carried out in a step gradient.

8. The process according to any of claims 6 or 7, characterized in that no RNAse is used.

9. A kit for separation of nucleic acid mixtures containing a chromatography material according to any one of claims 1 to 5.

## Revendications

1. Matériau de chromatographie pour la séparation de mélanges d'acides nucléiques où un support est transformé au moyen d'un réactif de signalisation, qui présente un groupe réactif transformé par une alkyl-ou dialkylamine ou bien contient un groupe capable de réaction transformable par une alkyl-ou dialkylamine, qui est mis subséquemment à réagir avec l'alkyl ou dialkylamine
caractérisé en ce que
le support présente une grandeur de particule de 1 à 500 µm et un diamètre des pores de 4 à 6 nm.

2. Matériau de chromatographie selon la revendication 1, caractérisé en ce que le support est du gel de silice, de l'oxyde d'aluminium, du bioxyde de titane, du verre poreux ou bien un support polymère.

3. Matériau de chromatographie selon l'une des revendications 1 ou 2, caractérisé en ce que alkyl-ou
le groupe réactif transformé par une dialkylamine ou à transformer est le groupe 3-glycidoxypropyle

4. Matériau de chromatographie selon l'une des revendications 1 à 3, caractérisé en ce que la dialkylamine est de la diéthylamine ou de la diméthylamine.

5. Matériau de chromatographie selon l'une des revendications 1 à 4, caractérisé en ce que la transformation du support par le réactif de signalisation se produit en conditions anhydres.

6. Procédé pour la séparation d'un mélange d'acides nucléiques avec un matériau de chromatographie selon l'une des revendications 1 à 5, où
la séparation chromatographique est accomplie par un procédé discontinu dans une simple colonne de chromatographie, une colonne de centrifugation, où le matériau de chromatographie est présent en suspension ou bien est fixé aux récipients réactionnels, aux plaques de microtitration, aux pointes de pipette, aux tiges d'agitation ou aux bandes de test.

7. Procédé selon la revendication 6, caractérisé en ce que la séparation chromatographique est accomplie dans un gradient échelonné.

8. Procédé selon l'une des revendications 6 ou 7, caractérisé en ce que l'on n'utilise pas de RNAse.

9. Trousse pour la séparation de mélanges d'acides nucléiques, qui contient un matériau de chromatographie selon l'une des revendications 1 à 5.
